Europäisches Patentamt

European Patent Office

Office européen des brevets

(19)

(11) Numéro de publication: **0 106 709**

**A2**

(12) # DEMANDE DE BREVET EUROPEEN

(21) Numéro de dépôt: 83401297.3

(22) Date de dépôt: 22.06.83

(51) Int. Cl.³: **B 25 J 5/00**
**B 62 D 57/02**

(30) Priorité: 23.06.82 FR 8210986

(43) Date de publication de la demande:
25.04.84 Bulletin 84/17

(84) Etats contractants désignés:
AT BE CH DE GB IT LI LU NL SE

(71) Demandeur: INTERNATIONAL ROBOTIC ENGINEERING
INC.
Suite 1310 485 Madison avenue
New York, N.Y. 10020(US)

(72) Inventeur: Kroczynski, Patrice Alain
120 rue Camille Groult
F-94400 Vitry S/Seine(FR)

(72) Inventeur: Bodson, Robert
24 Avenue du Faisan
B-1950 Kraainem(BE)

(74) Mandataire: Phélip, Bruno et al,
c/o Cabinet Harlé & Phélip 21, rue de la Rochefoucauld
F-75009 Paris(FR)

(54) **Robot capable de se déplacer sur parois inclinées ou verticales.**

(57) L'invention concerne un robot capable de se déplacer sur parois inclinées ou verticales.

Son but est de fournir un robot ayant une simplicité et une mobilité supérieures aux robots multipodes existants. Le robot de l'invention est du type bipède. Un corps (9) porte deux pattes (1, 2) munies de pieds (5, 6) capables de transmettre à la surface-support les moyens fléchissants résultant du déséquilibre du robot quand il est relié à cette surface-support par une seule patte. Chaque patte peut s'accrocher en des emplacements prédéterminés de la surface-support, l'énergie et les signaux de commande ou d'information passent par le pied et la surface-support dans au moins certains des emplacements prédéterminés.

Fig 1

## ROBOT CAPABLE DE SE DEPLACER SUR PAROIS INCLINEES OU VERTICALES.

La présente invention concerne un robot capable de se déplacer sur des parois non horizontales,notamment sur des parois verticales, ou sur un plafond.

Des engins et robots capables de se déplacer sur des parois, comme les cuves de réacteur nucléaire, les coques de bateaux, les façades d'immeubles, les carlingues d'avions, sont connus mais ce sont des constructions lourdes et complexes, adaptées à des travaux importants. Ils mettent en oeuvre des moyens délicats et chers pour assurer leur positionnement. La plupart nécessitent, en plus de la fonction déplacement, une fonction de déplacement et positionnement d'outils afin d'assurer leur travail.

Pour des raisons de stabilité, ces robots sont multipodes, c'est-à-dire qu'ils comprennent un corps qui peut être relié à la surface support par plusieurs ensembles articulés appelés "pattes" munis chacun d'au moins un moyen de liaison amovible à la paroi, appelé "pied" et qui peut comporter des ventouses ou des électro-aimants ou bien des moyens d'accrochage mécaniques. A chaque instant, le corps de robot est relié à la surface-support par l'intermédiaire de plusieurs pattes. La présence de plusieurs pattes complique la construction de robot tout en réduisant ses possibilités de déplacements.

On connaît déjà des robots bipèdes, c'est-à-dire qui ne comportent que deux pattes, chacune d'elles pouvant être équipée d'un pied, ou de plusieurs pieds, et par ailleurs qui se déplacent sur un sol horizontal à la façon d'un être humain. Ces

robots bipèdes assurent leur déplacement grâce à un mécanisme qui fait varier la posiiton du centre de gravité de l'ensemble selon que l'une ou l'autre des pattes est reliée au sol. Ces robots sont compliqués du point de vue.dynamique, et ne peuvent pas se déplacer sur des sols fortement inclinés ou verticaux.

On connaît aussi des robots bipèdes destinés à se déplacer sur des surfaces d'inclinaison quelconques et présentant un grand nombre de trous, comme les fonds de chaudières ou d'échangeurs multitubulaires. Ces robots utilisent les trous de la surface comme points d'accrochage (cf. US-A-3 913452). Si l'on considère les systèmes formés par l'association d'un robot et d'une surface-support pourvue de moyens d'accrochage capables de coopérer avec des moyens complémentaires portés par les pieds du robot, on constate que, dans les systèmes connus, la liaison entre le robot et ses moyens de commande et d'alimentation est assurée en général par plusieurs câbles souples.

Cette liaison pose des difficultés, notamment si l'espace dans lequel le robot doit évoluer est encombré, si les câbles risquent d'être rompus, ou bien simplement par le poids ou la tension propre des câbles, qui peut déséquilibrer le robot.

Le but de l'invention est de fournir un système du type décrit plus haut, dans lequel la liaison par câble souple est évitée.

L'invention fournit dans ce but un système composé d'un robot et d'une surface-support le long de laquelle le robot peut se déplacer, le robot comportant un corps qui contient des dispositifs de commande, et deux pattes capables de transmettre à la surface-support les moments fléchissants résultant d'un déséquilibre du robot quand il est relié à la surface-support par une seule patte et/ou quand la surface-support est inclinée ou verticale, ces pattes étant équipées chacune d'un ou plusieurs pieds équipés de moyens d'accrochage prévus pour coopérer avec des moyens d'accrochage complémentaires qui sont prévus en des emplacements prédéterminés de la surface-support, caractérisé en ce que des moyens de transmission d'énergie et/ou de signaux de commande ou d'information sont disposés sur au moins un pied, et des moyens de transmission complémentaires des premiers sont disposés en plusieurs desdits emplacements prédéterminés de la surface-support, ces moyens de transmission étant connectés entre eux lorsque lesdits moyens d'accrochage sont en position de coopération.

Suivant un mode de réalisation, les pieds sont équipés de moyens d'accrochage mécaniques prévus pour coopérer avec des moyens d'accrochage mécaniques complémentaires qui sont prévus en plusieurs emplacements prédéterminés de la surface-support et dans ce cas il est avantageux de prévoir que :

- des moyens de transmission d'énergie et/ou de signaux de commande ou d'information sont disposés sur le pied et sur la surface support auxdits emplacements prédéterminés et sont connectés entre eux quand lesdits moyens d'accrochage sont en situation de coopération.

- si lesdits moyens de transmission de

4

signaux sont des moyens optiques, lesdits moyens optiques servent également comme capteurs pour la mise en place précise du pied dans la situation de coopération avec les moyens d'accrochage de la surface-support,

- les moyens d'accrochage mécanique du pied sont constitués par une pince dont au moins une mâchoire porte des capteurs et/ou des moyens de transmission (52,53) de signaux sur ses faces,

- le robot est associé à une paroi formée d'éléments modulaires pourvus chacun d'au moins un moyen d'accrochage conçu pour coopérer avec le pied.

Suivant un autre mode de réalisation, les pieds sont équipés d'un électro-aimant et de chambres de pression-dépression à parois souples, et au moins une desdites chambres est cloisonnée en plusieurs compartiments disposés de part et d'autre de l'électro-aimant et reliés séparément à une source de pression-dépression, ce qui permet de parfaire le positionnement de l'électro-aimant avant de l'activer.

Il est connu d'équiper un robot avec des articulations permettant une rotation d'une patte par rapport à un axe perpendiculaire à la surface-support, ce qui permet le déplacement du robot par pivotements successifs autour d'axes différents de ce type. Suivant une modalité intéressante, les articulations reliant les pattes au corps comportent aussi chacune un axe de pivotement distinct parallèle à la surface-support et il est possible de déplacer le robot par pivotement autour de ces axes parallèles à la surface-support. Cette modalité augmente

5

les possibilités de déplacement du robot, notamment pour franchir des obstacles.

De toute façon, il est avantageux de prévoir que le robot comprend des moyens pour remplacer les pieds d'une des pattes.

L'invention s'applique notamment aux domaines suivants :

- nettoyage et ponçage de petites surfaces sous l'eau comme, par exemple, les hélices de bateaux, les bateaux de plaisance,

- dégivrage et nettoyage des carlingues d'avions,

- nettoyage de vitrines, écritures sur des vitrines et panneaux d'information,

- interventions en milieu hostile, par exemple site radioactif,

- peinture côté paroi de grandes surfaces, projection de matière (fibre de verre, plastique, sable, grenaille) pour le traitement de surface comme, par exemple, les cuves de réservoirs,

- détection, inspection, repérage par caméra,

- perçage, taraudage, rivetage, soudure sur les avions ou autres surfaces,

- support de palans et autres matériels de manutention,

- traitement de surfaces côté opposé à la paroi pour la peinture de gros engins en utilisant le dispositif modulaire de positionnement,

- desserte de centres d'usinage ou de tours automatiques en utilisant le dispositif modulaire de positionnement,

- robot pour préparation culinaire et autres,

- robot d'intervention sous marine sur rack pétrolier.

L'invention va maintenant être exposée plus en détail à l'aide d'un certain nombre d'exemples de robots bipèdes selon l'invention, décrits à titre non limitatif.

Fig. 1 représente, vu en élévation de face, un robot bipède ;

Fig. 2 représente le même robot de profil ;

Fig. 3 représente le même robot vu de dessus ;

Fig. 4 représente un système de fixation du support par dépression et magnétique ;

Fig. 5 représente un robot bipède suivant une variante pouvant, en plus, sauter des obstacles- vue profil ;

Fig. 6 représente le même robot en élévation de face ;

Fig. 7  représente la cinématique du même robot pour sauter un obstacle en a-b-c, et en d la disposition de ce robot avec un dispositif de pied mécanique (des pinces) ;

Fig. 8 représente un robot bipède avec inverseur outil-prise de paroi vu en élévation;

Fig. 9 représente le même robot de face;

Fig. 10 représente un robot bipède en plafond à redondance de degrés de liberté pour travail en position vu en élévation ;

Fig. 11 représente le même robot vu de face ;

Fig. 12 représente les empreintes successives d'un robot bipède pour mettre en évidence la cinématique de marche de base ;

Fig.13 représente une variante de la cinématique de marche;

Fig.14 représente,en élévation,un robot bipède selon l'invention sur une paroi possédant un relief de positionnement;

Fig.15 représente un type de module de paroi vu en plan;

Fig.16 représente une coupe sur des modules de parois fixés sur une maçonnerie et comportant un retour d'angle;

Fig.17 représente une variante de fixation magnétique et pression sur paroi vue en coupe.

Fig.18 représente la même variante de fixation vue par dessous;

Fig.19 représente une autre variante de robot bipède vue en élévation;

Fig.20 représente la même variante en profil;

Fig.21 représente,en élévation,une variante de robot bipède;

Fig.22 représente,vu de dessus,le même robot;

Fig.23 représente un principe d'accrochage pour robot bipède en plafond;

Fig.24 représente,vu en élévation,une variante de robot bipède avec, en coupe,les ventouses de dépression et magnétique.

Fig.25 représente une ventouse vue de dessous du même robot et le mouvement d'un outil de travail;

Fig.26 représente le schéma fonctionnel des organes principaux capteurs et actionneurs du robot bipède;

Fig.27 représente,en perspective,une pince de robot adaptée pour robot bipède(la pince formant le dispositif mécanique de fixation du pied)

Fig.28 représente un détail de la même adaptation de pince;

Fig.29 représente un détail en coupe d'un système de clampage pour robot bipède;

Fig.30 représente un détail en coupe du verrouillage du clampage;

Fig.31 représente,en élévation,la moitié d'un robot bipède avec dispositif mécanique de clampage.

Un robot selon l'invention comprend deux pattes (1) et (2) capables d'être axe de la rotation de la cinématique de marche et lien avec le support. Chaque patte étant solidaire d'un actionneur de rotation (3) pour la patte tribord,(4) pour la patte babord suivant un axe sensiblement perpendiculaire à la paroi (6) support du robot. Chaque patte se termine par un ou plusieurs pieds qui ont pour fonction d'assurer la prise avec le support. Le robot est apte à se déplacer sur des supports verticaux,inclinés,en plafond ou au sol mais,quelle que soit la position du support, une prise de fixation ou clampage est assurée par les pieds du robot. En effet,la classe de démarche est le remplacement de l'équilibre dynamique des bipèdes(avec cycle d'accumulation et dépense d'énergie) par une démarche avec équilibre statique réalisée au moyen d'une prise du support sur lequel évolue le robot. Cette prise est,suivant les variantes:mécanique et/ou à dépression et/ou magnétique assure une liaison par laquelle se transmettent les forces d'appui et également les moments fléchissants résultant du déséquilibre du robot sur une patte.

Sur la version de base,on conjugue les effets d'un électro-aimant (5) et d'une dépression conservée par un joint annulaire (6).

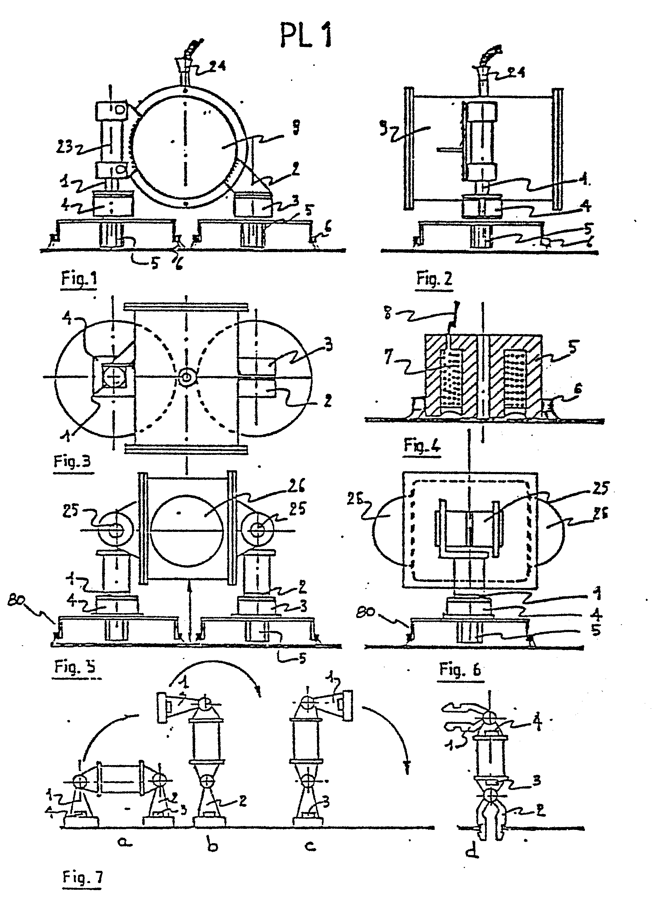

Sur la figure 4,on remarque le conduit central destiné à mettre en communication l'interface support/pied avec un générateur de dépression. Les pièces polaires de l'électroaimant (5) sont concentriques,le bobinage (7) est alimenté en courant électrique redressé par un fil (8). Pour simplifier certaines figures,on a représenté chaque pied complet par un rectangle avec une croix lorsqu'il est vu en éléva-

0106709

9

tion,et par un rond avec une croix lorsqu'il est vu par dessous.

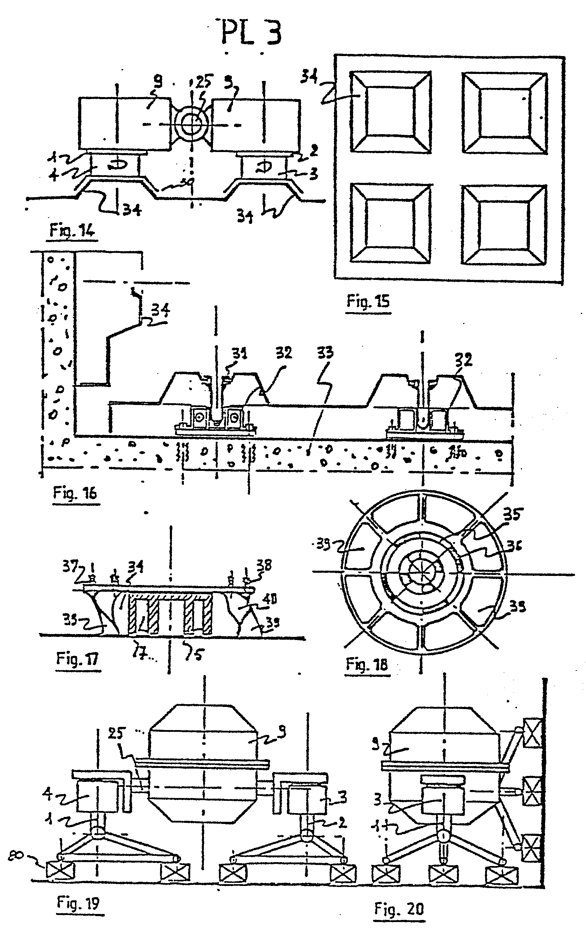

Dans une autre variante d'un pied de robot bipède, les figures 17 et 18 montrent la configuration de chambres de pression/dépression autour d'une pièce magnétique constituée par un électroaimant (5). La chambre annulaire centrale (34) est mise en dépression par le perçage central de l'électroaimant grâce à des encoches de quelques 1/10 de mm (35)(36) pratiquées sur les pièces polaires.Les chambres de pression/dépression(39)(40) forment des secteurs annulaires et coaxiaux à la chambre annulaire centrale(34). Les chambres (39) et (40) communiquent avec des électrovannes ou électrodistributeurs par l'intermédiaire de raccords (37) et (38). Par ce dispositif,il est possible de parfaire le positionnement d'un robot sur une paroi.

De chaque côté de l'axe de la figure 17,on a représenté les positions extrêmes que peuvent prendre les chambres (39) et (40). Naturellement,toutes les positions intermédiaires entre ces deux extrêmes sont réalisables.Il suffit,pour cela,de contrôler la pression des différentes chambres au moyen de capteurs de pression,capteurs de posi- tion ou débit-mètre,l'organe de commande étant les électrodistributeurs qui conduisent le fluide jusqu'aux chambres. Pour obtenir un déplacement fin du pied du robot constitué par la figure 17, on applique successivement les pressions dans les chambres pour provoquer l'avance de la chambre (39) qui est en contact avec le support. Une fois cette position obtenue,on met la chambre (39)en dépression maximum,on coupe l'alimentation de l'électroaimant et on établit une pression différentielle nulle par rapport à l'environnement du robot dans les chambres (40) et (34),ce qui provoque le déplacement du pied d'une distance égale à la moitié de la différence entre la position à droite de l'axe de la figure 17 et la position à gauche pour amener l'électro-aimant et la chambre (39) à être coaxiaux. Ces petits déplacements seront particulièrement utiles dans des applications où un positionnement très précis est nécessaire.

Une variante par rapport à la figure 4 consisterait à remplacer l'électroaimant (5) par un aimant au cobalt,et conserver des spires de bobinage (7) pour produire un champ magnétique de sens opposé à celui de l'aimant permanent. Dans ce cas, lors de l'impulsion de courant dans la bobine on supprime la dépression,les leviers du joint (6) ont tendance à éloigner l'aimant (5) du support, l'impulsion suffit à vaincre la remanence magnétique,et à décoller le pied. Cette variante de la figure 4 est utile lorsqu'on désire assurer un maintien du robot sur la paroi verticale en cas de coupure du courant d'alimentation.Pour assurer la sécurité de la fixation à la paroi,des tests sont prévus suivant les combinaisons de moyens en oeuvre:pour la fonction magnétique assurée par un électroaimant suivant la figure 4,il est prévu de recueillir une tension aux bornes d'une résistance (7) de très faible valeur,connectée en série avec l'alimentation de l'électroaimant. Pour la fonction dépression,un capteur de pression différentielle, placé près du générateur de dépression,est connecté.Enfin, pour une fonction mécanique,c'est le capteur de déplacement qui fournira l'information. On peut disposer un capteur de proximité capacitif ou inductif ou à ultrasons.

Ces informations déclenchent une interruption hiérarchisée au niveau du microprocesseur qui renvoie alors à une procédure programmée pour revenir à une meilleure prise.

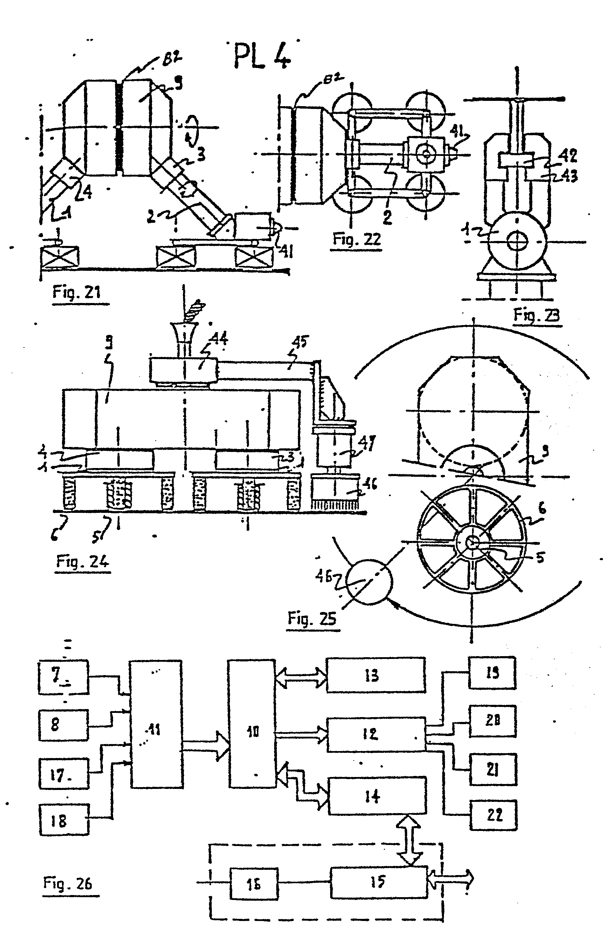

Sur les figures 1, 2 et 3,on voit l'architecture mécanique de la version de base du robot bipède. On remarque la grande simplicité. Seule la patte (1) est montée sur un vérin (23) pour assurer le dégagement en hauteur d'une patte pendant que l'autre est en fixation sur la paroi. Le corps (9)est réalisé par un tube métallique sur lequel sont fixées les brides. Le corps comprend les circuits du microprocesseur (10)représenté figure 26,les circuits d'interface d'entrée (11),les circuits d'interface de sortie (12),la carte mémoire (13). l'interface de communication série (14). Quand plusieurs robots travaillent en équipe ,un.

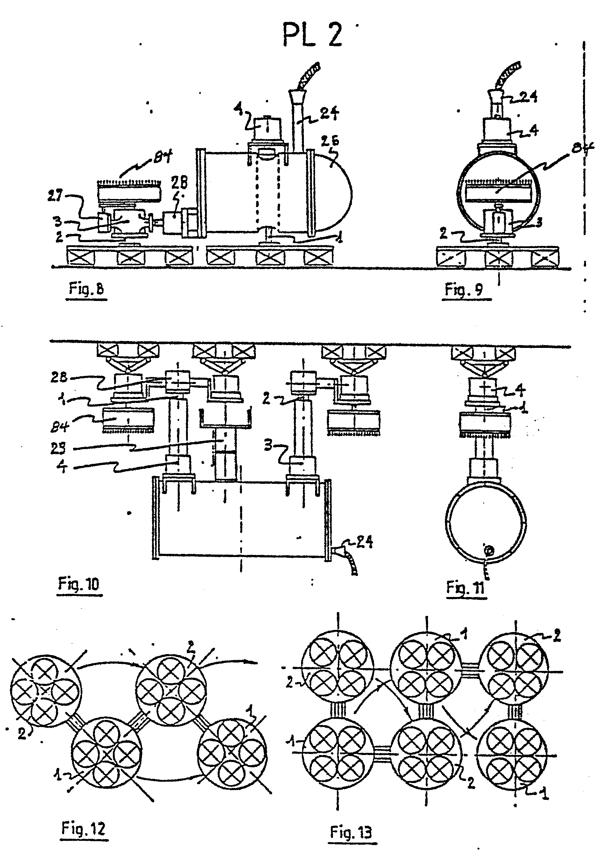

processeur frontal (15) doit être raccordé pour assurer la gestion de l'ensemble;de même un modem (16) est connecté pour les applications à distance ou pour donner des ordres à distance. La capteurs de déplacement (17)et système à ultra-sons pour prévenir des obstacles (18) ou capteurs à réflexion optique sont connectés sur l'interface d'entrée (11), alors que les actionneurs comme les électroaimants (19), les moteurs de mise en rotation (20) ou vérins électriques (21) ou moteur d'outils (22)sont connectés à l'interface (12). Ce genre d'architecture électronique est connu. Il est précisé que les actionneurs peuvent être pneumatiques-(vérin-moteur)ou hydrauliques ou électriques. Par exemple,les actionneurs en rotation des pattes (3) et (4) peuvent être réalisés par des ensembles motoréducteurs électriques, réducteur cycloïdal et moteur électrique à réluctance variable ou à courant continu. Le vérin (23),dans cette version, est un vérin électrique à vis à billes. L'alimentation s'effectuera par un conduit pour câble (24)soit électrique, soit pneumatique ou hydraulique. La démarche de base du robot bipède est représentée figure 12. Chaque patte devient, tour à tour, axe de rotation de la cinématique de marche; les angles de rotation de chaque pas peuvent être variables de quelques degrés à 180°. Quand les pattes sont couplées à un inverseur pour servir d'outil comme,par exemple,sur la figure 8,on aura avantage à utiliser une démarche suivant la figure 13. En effet,le recouvrement assure que toute la surface est parfaitement nettoyée par le robot. De plus, une seule patte étant équipée d'outil,le robot brosse la surface support avant son passage,donc permet une meilleure prise.

Les figures (5) et (6) montrent une variante de robot qui permet, en plus, de sauter des obstacles d'une hauteur "h". Dans ce cas,le franchissement de l'obstacle se fait par la démarche montrée sur la figure 7 -ler pas (a)- 2ème pas (b)-3ème pas (c),pour revenir en position (a). Naturellement,cette fonction peut également être assurée quand les pieds du robot sont à fixation mécanique,comme illustré sur la figure 7 en "d".

Dans cette variante, on réalise cette fonction complémentaire de saut par deux actionneurs (25) en rotation suivant un axe parallèle au plan des pieds du robot. On a disposé des hublots sphériques (26) de part et d'autre des corps de ce robot pour montrer la possibilité d'installer des caméras d'inspection ou autres senseurs optiques.

Sur la variante de l'invention figure 8, on note la disposition d'un codeur de rotation (27) sur l'actionneur de rotation (3). Ce codeur peut être du type incrémental ou absolu. L'axe de l'actionneur(3) est solidaire d'un côté d'un pied du robot de l'autre d'un outil (une brosse par exemple). On utilisera un actionneur à deux vitesses: une vitesse lente pour assurer la marche robotique et une vitesse rapide pour l'usage de l'outil. La position travail ou marche est assurée par un actionneur rotatif(28) qui peut être un vérin à palette dans le cas d'une version hydraulique.

Sur la figure 10, une variante de robot bipède multipode montre le travail en positionnement en plafond. On voit le râtelier (29) pour changeur automatique d'outils. Ces dispositifs sont connus. On connaît également les difficultés de positionnement précis pour les robots de classe mobile. Une variante de l'invention permet d'éviter cet inconvénient. Il est, en effet, associé au robot un support d'un relief particulier qui permet de garder strictement la même cote de pas sans glissement ou imprécision. Un premier aspect physique de cette variante est représenté figure 14: le robot possède des pieds qui épousent la géométrie de supports modulaires. La figure 15 représente l'un de ces supports modulaires (34) qui sont mis côte à côte de manière à pouvoir développer de grandes surfaces. Le système de prise des pieds sur le support figure 14 reste magnétique et dépression, les joints annulaires de dépression sont reportés à la périphérie du pied (30) sous le support pour créer la fixation. Ces électroaimants sont activés par le processeur frontal (15), ou par un déclenchement depuis le pied du robot. La variante représentée figure 16 est également basée sur un support modulaire avec relief complémentaire du pied du robot,mais le dispositif est complété par une prise de courant coaxiale,genre allume-cigares (31) de voiture qui permet au robot de se libérer de son câble d'amenée d'énergie, et également par ce moyen,de communiquer avec le processeur frontal (15) par codage d'impulsions sur porteuse haute fréquence. Ce procédé est connu.

On remarquera sur la figure 16 le profil courant (32)assurant,à la fois,la liaison avec la maçonnerie (33) et le positionnement des modules par contact avec la prise (31).

Sur les figures 21 et 22,la variante de robot bipède représentée possède un axe de rotation vertical pour chaque patte,comme tous les robots x de la présente invention, plus un axe de rotation sensiblement incliné,et le corps du robot est divisé en deux parties mises en rotation,l'une par rapport à l'autre,à l'aide d'un actionneur de rotation. Un changeur d'outils (41) est figuré.

Il est précisé que toutes ces variantes peuvent se mouvoir sur des supports modulaires ou des supports plans, suivant les équipements de fixation ou clampage des pieds du robot. En particulier,figure 23,est représenté un moyen de fixation sur des platines en forme de tête de clou (42), l'organe de préhension du robot étant une pince (43)dont les mors sont échancrés pour s'adapter au profil de la tête (42). Il est évident que l'autre pince du robot peut saisir un clou à deux têtes dont la 2ème tête sert de fixation à un autre robot pour une opération ponctuelle:franchir un obstacle par exemple.

Une autre variante de robot bipède est représentée figures 24 et 25. Dans cette variante,les pattes du robot sont subdivisées en huit pieds,en néoprène à cellules fermées- (ou tout autre corps élastique cellulaire)- pour permettre, par élasticité,de dégager une patte lors de la rotation de l'autre. A cet effet,on fait varier la dépression différentielle par rapport à l'environnement du robot, de manière à créer un couple de redressement qui libère en soulevant la patte opposée. On remarquera que l'électroaimant central est laissé libre de fixation à sa partie haute,de manière à ne pas entraver la liberté d'oscillation des pattes. Un actionneur (44) est monté au centre du robot;il est raccordé à un bras (45) pour tenir l'outil (46) mis en rotation par un moteur (47). Il faut observer que,au lieu de travailler sur le support du robot,l'outil peut,au contraire,être dirigé à l'opposé du support,c'est-à-dire vers la flèche dessinée dans l'axe de/rotation de l'outil de la figure (24). Notamment pour la peinture de grands objets,on utilisera cette disposition constructive pour fixer un pistolet de peinture ou autre pulvérisateur.

Sur la figure 25,la moitié haute du robot a été représentée vue de dessus,et la moitié basse vue de dessous, dans un but de gain de place.

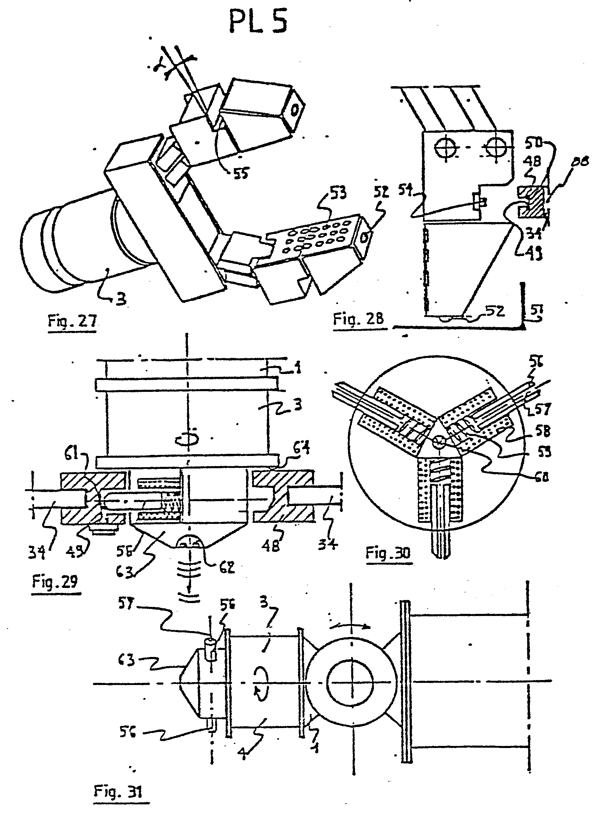

Les figures 27 et 28 montrent une variante de patte du robot bipède pour marche sur support modulaire (34). Le support doit présenter des évidements délimités par un profil (48) en matière dure et isolante. Ce profil comporte une gorge (49)avec , au fond,des contacts métalliques (50). Ces contacts sont connectés à une source de courant électrique qui fournit l'énergie au robot par l'intermédiaire du contact (54)positionné dans une échancrure de la pince. L'échancrure (55)est ajustée à la géométrie du profil(48)avec des pentes de quelques degrés (angle $\alpha$ )sur la figure 27,de manière à provoquer le coïncement ou clampage pour la prise du robot bipède. L'alimentation électrique du robot passe par des plots de contact (50). Le robot assure une procédure de positionnement pour se mettre sur les contacts par lecture de ses capteurs de position,lecture d'un inclinomètre solidaire de la patte ou tests successifs si l'application robotique ne nécessite pas de déplacements fréquents du robot.

La procédure de positionnement sera réalisée par rotation de l'actionneur (3) ou (4). Les plots,à un potentiel différent,seront diamétralement opposés. Il est précisé que, dans une autre variante constructive de la présente invention,le contact 50 est réalisé continu à la périphérie de

0106709

15

l'ouverture de paroi (34),et connecté à une polarité du générateur de courant électrique. L'autre polarité à la masse
sera transmise par un deuxième contact (51)en fond de l'alvéole. Dans ce cas,le contact côté robot sera réalisé par une
pièce métallique (52)dotée d'un ressort pour établir une
liaison électrique de qualité sans avoir à usiner,avec précision,la pièce (51).

Sur la figure 27,il apparaît des senseurs (53)qui
sont soit optiques (fibre optique) ou tactile (néoprène conducteur). Ces senseurs sont des techniques connues,on ne les
décrira pas plus avant,mais on notera que,dans la position
fixée ou clampée à la paroi,la possibilité d'échange d'informations avec le processeur frontal par ce moyen. Il est
précisé,dans la présente invention,que l'une des pattes (en
l'occurence une pince) étant fixée sur la paroi modulaire,
l'autre travaille avec toutes les possibilités habituelles
des robots. Pour accroître son volume de travail,la patte
vient prendre prise sur le support modulaire,le robot progresse de quelques pas suivant la démarche robotique bipède ci-
dessus explicitée,pour arriver à une autre position de
travail. Il est évident que plusieurs robots bipèdes,suivant
la présente invention,peuvent travailler ensemble sur un même
objet,la synchronisation étant effectuée par le processeur
frontal (15). De même,un robot en prise sur son support
a toutes facilités,avec son autre patte,de tenir un autre
robot. Cet assemblage permet,par exemple,de franchir des obstacles importants,ou aux équipes de robots d'assembler eux-
mêmes des supports xpour prolonger leur progression.

Une autre variante de robot bipède avec pied à
clampage est représentée figures 29-30-31. Cette variante
consiste en un dispositif de clampage à verrouillage mécanique
par électroaimants (58). Il a été représenté un système
composé de trois dispositifs disposés à 120° (figure 30).Il
est précisé que l'on peut disposer un nombre quelconque
de dispositifs en fonction de la dimension et la rigidité
sur le support que l'on désire obtenir suivant l'application robotique. Le support modulaire peut être réalisé par des plaques d'acier perforées emboqties,ou des plaques en matière plastique moulées, ou un simple grillage à mailles carrées ou rectangulaires.

Un dispositif de verrouillage est composé d'un noyau en acier (56) percé dans son axe de manière à laisser passer la lumière émise depuis une diode électroluminescente (60) ou diode laser. Pour certaines applications où les poussières pourraient obturer le perçage,on pourra le remplacer par une fibre optique. Au centre des axes des perçages (57) ou à l'aboutissement des fibres optiques est fixé le dispositif optique (60)qui comprend un émetteur récepteur de lumière cohérente ou non. Ces émetteurs récepteurs pour fibre optique sont connus;on ne les décrira pas plus avant.

Lorsque le pied (1) du robot bipède suivant la présente invention s'approche de la paroi(34),il est guidé par la concentricité de la pièce de bout (63),puis la butée (64)assure le positionnement au nu de la paroi. Pendant toute cette approche,les électroaimants sont alimentés,ce qui efface vers l'intérieur les verrous (56). Dès que la butée (64)arrive en contact avec le profil,les émetteurs de lumière (60)sont allumés,et la rotation commence par l'actionneur (3) jusqu'à ce que le récepteur détecte la lumière.Le renvoi de la lumière dans la gorge du profil(48)est assuré par des miroirs ou des connections optiques entre les points qui correspondent aux contacts électriques (49). Il a été représenté des contacts ponctuels (49)qui alimentent le robot en énergie électrique. Dès que le flux lumineux est renvoyé, les électroaimants relâchent leur action,ce qui provoque, par l'action des ressorts (59),un verrouillage du pied du robot. A partir de ce moment,les émetteurs récepteurs de lumière transmettent les informations entre le robot bipède et le processeur frontal.

On remarquera figure 29 une sonde à ultrasons (62) composée d'un ensemble émetteur récepteur d'ultrasons dans l'air (fréquence environ 40 KHZ). Ce dispositif permet au robot d'apprécier la distance entre son pied et un obstacle. Ces dispositifs dits "sondes à ultrasons" étant connus,on ne les décrira pas plus avant.

Il est évident que le robot bipède,suivant la présente invention, à l'aide de ses pieds à clampage,peut, non seulement,progresser sur la paroi modulaire,mais se servir avec le pied libre d'outils qui seront munis pour leur prise d'un profil(48). De plus,ces outils seront munis du même dispositif à clampage pour assurer leur fixation après usage sur la paroi, en un des emplacements prédéterminés.

La présente invention est utilisable notamment dans le domaine des ateliers flexibles. En effet,l'intérieur d'une cellule flexible abritant une machine à commande numérique,on tapisse les parois intérieures de la cellule de parois modulaires pour robot bipède,ce qui permet une flexibilité d'approvisionnement,de travail,de réparation encore jamais atteinte dans ce type de production industrialisée. Une autre application particulièrement intéressante est l'équipement d'une cuisine industrielle avec des parois modulaires qui permettent l'accès des différents appareils de préparations culinaires aux 2 équipes de robots bipèdes. Les appareils de préparation seront considérés comme des outils et munis des dispositifs de clampage ci-avant décrits.De même que les éléments de préparation seront munis de dispositifs de clampage et transportés d'un endroit à un autre de la paroi modulaire,par une équipe de robots ,suivant les impératifs des préparations.

## REVENDICATIONS

1. Système composé d'un robot et d'une surface-support le long de laquelle le robot peut se déplacer, le robot comportant un corps (9) qui contient des dispositifs de commande, et deux pattes (1,2) capables de transmettre à la surface-support les moments fléchissants résultant d'un déséquilibre du robot quand il est relié à la surface support par une seule patte et/ou quand la surface support est inclinée ou verticale, ces pattes étant équipées chacune d'un ou plusieurs pieds équipés de moyens d'accrochage (5,6, 4,3) prévus pour coopérer avec des moyens d'accrochages complémentaires (42) qui sont prévus en des emplacements prédéterminés de la surface- support, caractérisé en ce que des moyens de transmission d'énergie et/ou de signaux de commande ou d'information (31,53,54,60) sont disposés sur au moins un pied, et des moyens de transmission complémentaires des premiers (31,49) sont disposés en plusieurs desdits emplacements prédéterminés de la surface support, ces moyens de transmission étant connectés entre eux lorsque lesdits moyens d'accrochage sont en position de coopération.

2. Système selon la revendication 1 et dans lequel lesdits moyens de transmission de signaux (53, 60) sont des moyens optiques, caractérisé en ce que lesdits moyens optiques servent également comme capteurs pour la mise en place précise du pied dans la situation de coopération avec les moyens d'accrochage de la surface support.

3. Système selon l'une des revendications 1 ou 2, caractérisé en ce que les moyens d'accrochage mécaniques du pied sont constitués par une pince dont au moins une mâchoire porte des capteurs et/ou des moyens de transmission (52,53) de signaux sur ses faces autres que sa face mécaniquement active.

4. Système selon l'une des revendications 1 à 3, dans lequel les moyens d'accrochage du pied sont constitués par un électro-aimant (5) ou par une chambre (34, 39, 40) en matière souple reliés à des moyens de pression-dépression for-

30 Mai 1983

mant ventouse, les emplacements prédéterminés de la surface support étant des parties non rugueuses et ferromagnétiques de cette surface, caractérisé en ce qu'au moins une desdites chambres est cloisonnée en plusieurs compartiments (39, 40) en forme de secteurs d'anneaux coaxiaux autour de l'électroaimant (5) et reliés séparément aux moyens de pression-dépression, ce qui permet d'amener avec précision l'électro-aimant dans la position désirée avant de l'activer.

5. Système selon l'une des revendications 1 à 4 et comportant des articulations permettant une rotation d'une patte par rapport à un axe perpendiculaire à la surface support, caractérisé en ce que les articulations reliant les pattes au corps comportent aussi chacune un axe de pivotement distinct parallèle à la surface support, et en ce qu'il est possible de déplacer le robot par pivotement autour de ces axes parallèles à la surface support.

6. Système selon l'une des revendications 1 à 5, caractérisé en ce qu'il comprend des moyens pour remplacer les pieds d'une des pattes par des outils de travail.

7. Système selon l'une des revendications 1 à 6, caractérisé en ce que la surface-support est constituée d'éléments modulaires, dont au moins certains sont pourvus de moyens d'accrochage complémentaire des moyens d'accrochage d'un pied.

PL 1

Fig. 1

Fig. 2

Fig. 3

Fig. 4

Fig. 5

Fig. 6

Fig. 7

PL 2

Fig. 8

Fig. 9

Fig. 10

Fig. 11

Fig. 12

Fig. 13

## PL 3

Fig. 14

Fig. 15

Fig. 16

Fig. 17

Fig. 18

Fig. 19

Fig. 20

PL 4

Fig. 21

Fig. 22

Fig. 23

Fig. 24

Fig. 25

Fig. 26

0106709

PL 5

Fig. 27

Fig. 28

Fig. 29

Fig. 30

Fig. 31